# FASCICULE DE BREVET EUROPEEN

(11) **EP 2 989 218 B1**
(45) Date de publication et mention de la délivrance du brevet: **24.04.2019**
(21) Numéro de dépôt: 14726774.4
(22) Date de dépôt: 25.04.2014
(51) Int. Cl.: H05B 6/24, H05B 6/36, H05B 6/42, C21C 5/52, F27B 14/06, F27B 14/14

(54) **PROCEDE DE FONCTIONNEMENT D'UN FOUR A CHAUFFAGE PAR INDUCTION ELECTROMAGNETIQUE ET SON UTILISATION POUR LA FUSION D'UN MELANGE DE METAL(UX) ET D'OXYDE(S) REPRESENTATIF D'UN CORIUM**
VERFAHREN ZUM BETRIEBEN EINES ELEKTROMAGNETISCHEN INDUKTIONSOFENS UND VERWENDUNG ZUM SCHMELZEN EINER MISCHUNG AUS METALL(EN) UND OXID(EN) SOWIE DERARTIGE MISCHUNG ZUR DARSTELLUNG EINER CORIUM
PROCESS OF OPERATING AN ELECTROMAGNETIC INDUCTION FURNACE AND USE FOR MELTING A MIXTURE OF METAL(S) AND OXIDE(S), SAID MIXTURE REPRESENTING A CORIUM

(30) Priorité: 26.04.2013 FR 1353840
(43) Date de publication de la demande: 02.03.2016
(73) Titulaire: Commissariat à l'Énergie Atomique et aux Énergies Alternatives, 75015 Paris (FR)
(72) Inventeur: WILLERMOZ, Guy, F-13650 Meyrargues (FR); PANAGET, Laura, F-84120 Pertuis (FR)
(74) Mandataire: Nony
(86) Numéro de dépôt international: PCT/IB2014/061004
(87) Numéro de publication internationale: WO 2014/174489

(56) Documents cités:
- EP-A1- 0 747 648
- EP-A1- 2 572 815
- WO-A1-2013/020042
- JP-A- 2006 153 362

## Description

### Domaine technique

La présente invention concerne un procédé de fonctionnement de four à chauffage par induction électromagnétique, destiné à faire fondre dans un creuset au moins un matériau conducteur électrique, tel qu'un oxyde et/ou un métal, comprenant au moins un inducteur à au moins une spire et au moins un circuit de refroidissement adapté pour refroidir le creuset.

Elle a trait plus particulièrement la mise en oeuvre d'un nouveau fluide caloporteur dans au moins un des circuits de refroidissement.

Un four particulièrement visé par l'invention est un four appelé à creuset froid, aussi appelé auto-creuset.

L'invention s'applique à tout four à chauffage par induction électromagnétique réalisé avec un creuset, i.e. avec des parois physiques qui définissent un récipient, tel qu'un creuset en matériau réfractaire ou métallique.

Une application visée particulièrement intéressante est la fusion d'un mélange de métal(ux) et d'oxyde(s), tel que l'oxyde d'uranium UO₂, représentatif d'un corium, en vue d'étudier les interactions dudit corium avec un fluide caloporteur, tel que l'eau liquide ou le sodium. Un corium est un mélange de matériaux fondus (UO₂, ZrO₂, Zr, acier) qui, dans des cas d'accidents nucléaires graves, est susceptible de se former lors de la fusion des assemblages de combustibles nucléaires et des barres de contrôle nucléaire.

Bien que décrite en référence à la fusion d'un corium, l'invention s'applique également à la fusion par induction électromagnétique de tout matériau conducteur électrique dans laquelle un circuit de refroidissement est requis. L'invention s'applique ainsi en particulier aux fours utilisés en fonderie ou en métallurgie.

### Etat de la technique

Dans le domaine de la fonderie ou de la métallurgie, l'élaboration de matériaux nécessite généralement leur fusion et le maintien dans leur état liquide pendant un temps suffisamment long pour obtenir l'homogénéisation du liquide vis à vis des divers constituants ou de la température ou pour permettre à des réactions chimiques de s'accomplir au sein du liquide. Pour ce faire, il importe qu'un brassage turbulent anime le liquide. Ainsi, dans ces domaines, un procédé largement répandu pour réaliser la fusion de masses de métal importantes est celui du chauffage par induction électromagnétique dans un four à creuset. Les avantages majeurs d'un tel procédé sont sa simplicité de mise en oeuvre, son efficacité et le fait qu'il évite tout contact entre la source d'énergie thermique et le métal.

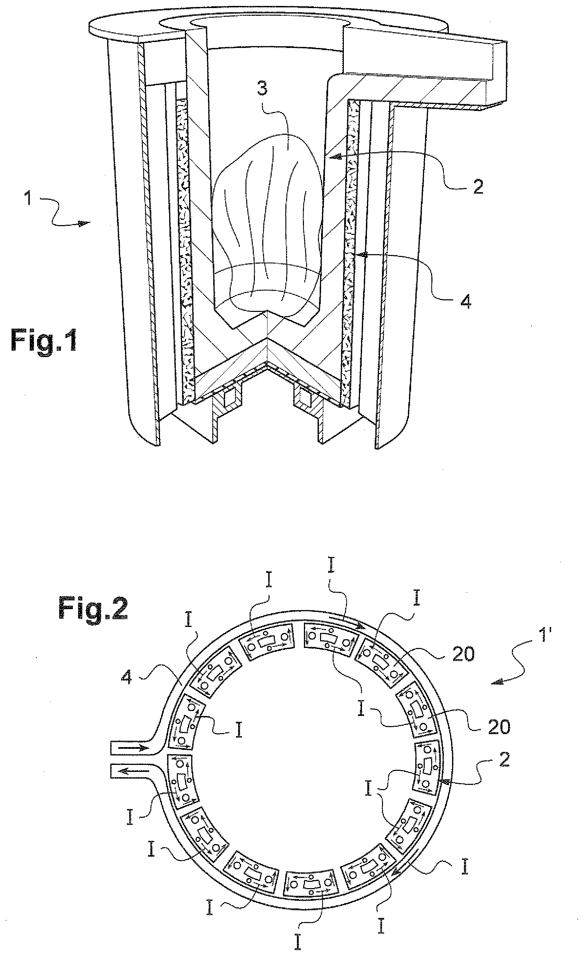

On a illustré en figure 1, un four 1 à chauffage par induction comprenant un creuset 2 destiné à contenir une charge 3, c'est-à-dire une certaine masse et volume d'un matériau conducteur électrique. Le creuset 2 est entouré d'un inducteur 4 alimenté en courant alternatif à une certaine fréquence élevée, destiné à chauffer par induction électromagnétique la charge 3 contenue dans le creuset.

Comme illustré sur cette figure 1, les parois du creuset sont réalisées en un matériau réfractaire, par exemple du graphite. Un inconvénient de ces creusets est que leurs parois s'élèvent à la température de la charge. Ainsi, le matériau réfractaire constituant ces parois et les impuretés qui y sont contenues sont susceptibles de diffuser dans la charge, ce qui est particulièrement gênant dans le cas où les creusets sont destinés à contenir des matériaux très réactifs, par exemple des alliages à base de titane ou de silicium, dont le traitement est destiné à fournir un produit de très haute pureté. Cela est également gênant dans le domaine particulier de mise en oeuvre qui est celui des inventeurs : ils ont en effet été confrontés à la nécessité de réaliser la fusion d'un mélange de métal et d'oxydes représentatif d'un corium (UO₂, ZrO₂, Zr, acier). Or, non seulement la même problématique de diffusion dans la charge du matériau réfractaire se pose, mais en outre la température à atteindre pour la fusion du corium est de l'ordre 3 000°K, la température de fusion de l'UO₂ étant de cet ordre de grandeur. Aucun matériau réfractaire, hormis la thorine (ThO₂) dont l'approvisionnement est rendu impossible du fait du caractère radioactif du thorium (Th), n'est capable de tenir cette température, du fait de la présence de métal à haute température.

Ainsi, la solution possible pour réaliser la fusion de matériaux réactifs avec les matériaux réfractaires et/ou de température de fusion très élevée consiste à utiliser un creuset mettant en oeuvre le même principe de chauffage par induction électromagnétique mais appelé creuset froid ou encore à parois froides. On parle également dans la littérature de four à induction du type à auto-creuset car, à la périphérie interne du four, contre les parois froides, se forme une couche solidifiée du matériau proprement dit de la charge qui peut être considérée comme constituant la paroi interne du creuset. Les fours à creuset froid ont déjà fait leurs preuves sur de petites quantités, typiquement quelques dizaines de kilos de charge de métal.

On a représenté en vue de dessus, à la figure 2, un tel creuset froid l': le creuset 2 est formé par une paroi en matériau électriquement conducteur, divisée verticalement en plusieurs secteurs longitudinaux 20, creux, isolés électriquement les uns des autres. Ces secteurs 20 sont couramment en un métal tel que du cuivre qui présente l'avantage d'avoir une faible résistivité électrique et de présenter de bonnes qualités d'échange thermique. Ces secteurs sont en outre parcourus intérieurement par une circulation de fluide de refroidissement (non représenté), couramment de l'eau. Ce fluide de refroidissement permet de maintenir la surface interne des secteurs 20 en contact avec la charge liquide à une température bien inférieure à la température de fusion de la charge, typiquement inférieure à 300°C.

Ce creuset 2 est agencé à l'intérieur d'un inducteur 4 alimenté en courant alternatif I qui crée des courants induits I dans les secteurs 20, courants I qui se referment en parcourant la paroi interne du creuset et dans lequel ils créent un champ magnétique. Ainsi, le courant à haute fréquence circulant dans l'inducteur 4 produit un courant périphérique dans chacun des secteurs 20. On retrouve sur la paroi interne de chaque secteur 20, un courant I proche du courant circulant dans l'inducteur multiplié par le nombre de spires de celui-ci. L'ensemble des courants à la périphérie interne de chaque secteur 20 produit un champ électromagnétique adapté à chauffer la charge contenue du creuset. En effet, tout matériau conducteur électrique dans un tel creuset est le siège des courants induits qui en interaction avec le champ magnétique crée par l'inducteur 4 entraîne l'apparition de forces électromotrices dites forces de Laplace. Ainsi, les courants induits permettent de chauffer le(s) matériau(x) de la charge jusqu'à la fusion et la charge liquide est brassée du fait des forces de Laplace.

Du fait du circuit de circuit de refroidissement, la température de la surface interne des secteurs 20 est bien moindre que celle de la charge en fusion, et il se produit une solidification rapide du matériau fondu en contact avec les secteurs 20 du creuset 2 et également avec le fond du four, appelé sole, ce qui crée une couche-barrière de diffusion solide évitant toute réactivité entre le matériau des secteurs et celui en fusion. Autrement dit, il y a création d'une croûte de faible épaisseur par solidification de la charge sur quelques millimètres.

Ainsi, les fours à creuset froids présentent tous les avantages des fours à chauffage par induction à creuset en réfractaire mentionné ci-dessus, tels que l'utilisation aux hautes températures, avec en outre une grande pureté de la charge dûe à l'absence de pollution par le creuset, la réalisation d'un brassage qui rend la composition de la charge liquide en fusion uniforme et améliore les transferts thermiques et donc augmente l'homogénéité de température.

Les fours creusets froids, dits à lévitation, peuvent également fonctionner selon un principe de lévitation. En effet, les parois internes du creuset peuvent être prévues avec une forme conique vers le bas de sorte que la section de ce dernier est plus petite en bas qu'en haut. Or, par principe, le produit du champ magnétique par la section du creuset est sensiblement constant sur l'axe du creuset. Il en résulte donc un champ magnétique qui croît fortement depuis le haut jusqu'en bas du creuset. Cette configuration est parfaitement adaptée à la lévitation d'un matériau puisque les forces de répulsion induites, i.e. les forces de Laplace ou de Lorentz, dans un matériau conducteur électrique placé dans le creuset sont très fortes à la partie inférieure du matériau et décroissent vers la partie supérieure. Un matériau conducteur électrique sous forme solide ou liquide peut donc être maintenu en lévitation stable dans un tel creuset. Le creuset étant froid, toute interruption de puissance est sans aucun danger car le liquide se répandant dans le creuset, se solidifie. La remise sous tension de l'inducteur permet de refondre le matériau et de reprendre la lévitation. A l'état de lévitation, le matériau peut être placé au contact d'une atmosphère contrôlée pour ne pas subir de dégradation. De plus, les forces électromagnétiques induisent un brassage turbulent dans le liquide en fusion. Les conditions de fusion de manière à obtenir une haute pureté peuvent donc être réalisées : la fusion se fait sans contact et les échanges thermiques entre le matériau et le creuset se font par rayonnement : ils restent donc très limités.

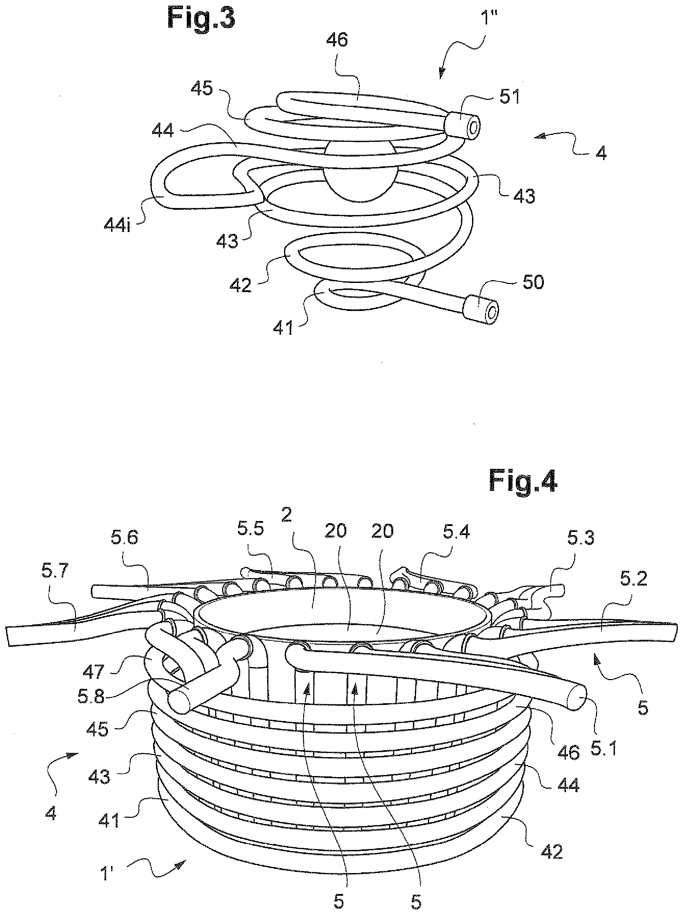

Des fours fonctionnant selon le principe de lévitation existent également sans creuset. On a représenté en figure 3, un tel four 1" à lévitation sans creuset. Comme illustré, l'inducteur unique (bobine d'induction) 4 d'un tel four 1" est constituée d'un nombre de six spires 41, 42, 43, 44, 45,46. Pour que la lévitation électromagnétique du matériau conducteur électrique placé à l'intérieur de l'inducteur se fasse correctement par les forces de Laplace, l'inducteur (bobine) 4 doit avoir une forme conique, resserrée en bas, d'où la forme d'enroulement avec diamètre croissant des spires inférieures 41, 42, 43. La forme conique ainsi délimitée par les spires inférieures 41, 42, 43 permet, lorsque la bobine 4 est alimentée sous courant alternatif, l'apparition des forces de Laplace qui poussent suffisamment vers le haut la charge 3 à faire fondre, telle que représentée sous la forme d'une sphère en figure 3. Ces forces de Laplace s'opposent à la gravité. Afin que la charge 3 ne soit pas éjectée hors de la bobine 4, il faut en outre créer des forces qui la ramènent vers le bas. Pour ce faire, on inverse les courant au-dessus de la charge 3 en faisant une boucle dans l'enroulement: ainsi, comme illustré en figure 3, la spire 44 est conformée en une boucle 44i à l'extérieur de l'axe d'enroulement des autres spires. Les courants circulent alors à ce niveau dans le sens inverse et créent dans la charge 3 d'autres forces de Laplace qui la poussent vers le bas. Ainsi, en assurant un dimensionnement précis des spires 41, 42, 43, 44, 45, 46 avec la boucle 44i d'inversion du courant, on crée un équilibre entre les forces orientées vers le haut et celles vers le bas qui s'appliquent sur la charge 3 afin de permettre sa lévitation.

En outre, un tel four 1" à lévitation sans creuset comporte un circuit de refroidissement qui parcourt l'intérieur de l'inducteur 4. Ainsi, comme illustré en figure 3, les spires 41-46 sont creuses et de l'eau, en tant que fluide caloporteur, pénètre à l'extrémité inférieure dans l'ouverture d'alimentation 50 et en sort par l'ouverture de sortie 51. Ainsi, le débit d'eau qui circule à travers l'inducteur 4 permet de le refroidir lors de son fonctionnement.

Jusqu'à présent, on utilise de l'eau comme fluide de refroidissement du creuset et/ou de l'inducteur des fours à induction qui viennent décrits. En effet, l'eau suffit largement pour les températures de fusion des matériaux conducteurs électriques que l'on a cherché à faire fondre

Les inventeurs ont été confrontés à la nécessité de trouver un autre caloporteur pour remplacer l'eau, en général dé-ionisée, dans un circuit de refroidissement de four à chauffage par induction pour les raisons déjà évoquées en partie précédemment.

Ainsi, non seulement, les inventeurs ont eu à proposer une installation pour l'étape proprement dite de fusion d'un corium mais en outre cette installation doit permettre, entre autres, d'étudier l'interaction du corium en fusion avec du sodium. Ainsi, une telle installation est prévue pour que le corium en fusion soit extrait par coulée du four dans un récipient remplie de sodium. Or, comme largement connu, le sodium réagit violement avec l'eau. De ce fait, la réglementation relative aux normes de sécurités interdit toute utilisation d'eau en présence de sodium et donc, cela s'applique à une installation visée par les inventeurs.

Le brevet EP 1 419 675 B1 divulgue une solution qui consiste à mettre en oeuvre des caloducs en tant qu'éléments de refroidissement afin de réduire les quantités d'eau dans les circuits de refroidissement des fours à creuset froid. La solution divulguée ne peut pas être appliquée à l'installation visée par les inventeurs car, le fluide présent au sein des caloducs reste de l'eau, ce qui est donc strictement prohibé par la réglementation.

Un perfectionnement de ce brevet EP 1 419 675 B1, en vue de répondre à la réglementation, pourrait consister à remplacer l'eau par un autre fluide dans les caloducs. Or, cela introduirait la problématique du refroidissement des caloducs eux-mêmes.

Par ailleurs, au-delà de la nécessité de remplacer l'eau par un autre caloporteur pour des raisons de réglementation relative à la sécurité, le refroidissement des fours à induction qui viennent d'être décrits n'est pas optimal en termes de bilan thermique, lorsqu'il est réalisé avec de l'eau. En effet, la capacité thermique Cp de l'eau est faible et de ce fait, dans un four à induction, en particulier à creuset, de dimensions non réduites, le refroidissement est loin d'être complètement homogène sur toute la hauteur du four et/ou de(s) inducteur(s).

Il existe donc un besoin d'un autre fluide caloporteur, ou autrement dit de refroidissement, que l'eau dans les fours à chauffage par induction électromagnétique, en particulier des fours à creusets froids.

Il existe un besoin particulier d'un autre fluide caloporteur qui ne soit pas conducteur électrique pour éviter tout parasitage de l'induction électromagnétique lors du fonctionnement des fours.

### Exposé de l'invention

Pour ce faire, l'invention a pour objet, sous l'un de ses aspects, un procédé de fonctionnement d'un four à chauffage par induction électromagnétique destiné à faire fondre au moins un matériau conducteur électrique, tel qu'un oxyde et/ou un métal, comprenant au moins un inducteur à au moins une spire et au moins un circuit de refroidissement adapté pour refroidir au moins l'inducteur, un creuset pour contenir le matériau à faire fondre et un circuit de refroidissement adapté pour refroidir les parois du creuset, selon lequel on fait circuler dans le circuit de refroidissement du creuset du CO₂ supercritique en tant que fluide caloporteur.

Par « CO₂ supercritique », on entend du CO₂ en phase supercritique, c'est-à-dire dans des conditions de pression et à température supérieures à celles de son point critique caractérisé par une pression Pc de l'ordre de 73 bars et une température Tc de l'ordre de 31°C.

Autrement dit, l'invention consiste à mettre en oeuvre un refroidissement au CO₂ supercritique dans un four à induction, ce qui permet tout d'abord une amélioration de la sécurité de ce dernier avec:
- prévention des explosions de vapeurs et des projections de liquide en fusion,
- amélioration de la détection des fuites : en effet, lorsque le fluide caloporteur est de l'eau comme dans l'état de l'art, il est difficile de détecter une fuite de faible ampleur alors que la détection de CO₂ par des détecteurs et son évacuation dans un système de ventilation autour du four sont aisées.

En outre, tout en étant plus sûre, la mise en oeuvre de CO₂ supercritique selon l'invention dans un four à induction améliore son refroidissement général en comparaison avec un refroidissement selon l'état de l'art à l'eau déminéralisée. En effet, le CO₂ supercritique offre également l'avantage d'avoir une capacité thermique Cp élevée, typiquement de l'ordre 30 à 40 kJ.kg⁻¹.K⁻¹ aux environs de 35°C à une pression de 80 bars, bien supérieure à celle de l'eau. Ceci permet des degrés de liberté dans la conception des fours à induction et, notamment, le diamètre des secteurs de parois de creuset peut être plus petit que ceux selon l'état de l'art dans un four à creuset froid. Il est ainsi possible selon l'invention d'augmenter le nombre de secteurs des parois de creuset et de réduire notablement l'encombrement des canalisations du (des) circuit(s) de refroidissement. En outre, avec du CO₂ supercritique en tant que fluide caloporteur, il est possible d'adapter le débit pour optimiser la capacité de refroidissement au centre du creuset du four qui est la zone où la température est la plus élevée. Ainsi, grâce à l'invention, la température au niveau du creuset d'un four à induction est plus uniforme que dans un creuset selon l'état de l'art.

Un refroidissement d'un four à induction avec du CO₂ supercritique selon l'invention a comme avantage essentiel de pouvoir être mis en oeuvre à l'échelle industrielle car il est propre, rapide et facilement contrôlable et utilise très peu de matières premières (faibles volume de CO₂ supercritique) contrairement aux refroidissements à l'eau selon l'état de l'art. De plus, le CO₂ supercritique a comme avantage de pouvoir être facilement recyclé.

Le CO₂ supercritique est largement envisagé pour remplacer les hydrofluorocarbures (HFC) en tant que réfrigérant dans les climatiseurs des automobiles. En outre, comme indiqué dans la demande de brevet EP1762809, il a déjà été envisagé comme fluide de refroidissement dans des échangeurs thermiques,. Enfin, il est aussi de plus en plus utilisé comme solvant dans l'industrie chimique [1]. De manière surprenante, la mise en oeuvre du CO₂ supercritique dans un four, à fortiori dans un four à induction, n'avait jamais été envisagée.

Le four de l'invention peut comprendre au moins un inducteur à au moins deux spires consécutives dont les sens d'enroulement sont inversés en formant une boucle de sorte à inverser le sens du courant électrique qui les traverse, de manière à former un four à lévitation.

Les parois du creuset sont de préférence en matériau conducteur électrique, de préférence en cuivre, de manière à former un four à creuset froid.

Les parois du creuset ou auto-creuset comportent avantageusement un fond, appelé sole. La sole peut être amovible ou comprendre un ou plusieurs orifices débouchant pour l'évacuation d'au moins le matériau en fusion.

La sole est de préférence en matériau conducteur électrique, de préférence en cuivre.

Selon une variante de réalisation préférée, on fait fonctionner l'inducteur du four simultanément à au moins deux fréquences différentes.

A titre d'alternative, selon une autre variante préférée, on fait fonctionner au moins deux inducteurs distincts simultanément à des fréquences différentes.

Avantageusement, l'une des fréquences de fonctionnement est adaptée pour la fusion d'un ou plusieurs métal(ux) et une autre fréquence de fonctionnement est adaptée pour la fusion d'un ou plusieurs oxyde(s).

La ou les fréquence(s) de fonctionnement d'au moins un inducteur est (sont) de préférence comprise(s) entre 10 et 500 kHz.

L'invention a également pour objet, sous un autre de ses aspects, un procédé de fonctionnement d'un four tel que celui qui vient décrit, selon lequel on fait circuler le CO2 supercritique à une pression comprise entre sa pression critique Pc, de l'ordre de 73 bars, et 100 bars et des températures comprises entre sa température critique Tc, de l'ordre de 31°c, en entrée dudit au moins un circuit de refroidissement et 50°C en sortie dudit au moins un circuit de refroidissement de sorte à avoir une capacité thermique massique Cp du CO₂ supercritique au moins égale à 4 kJ.kg⁻¹.K⁻¹.

L'invention a également pour objet, sous un autre de ses aspects, un procédé de fonctionnement d'un four tel que celui qui vient décrit, selon lequel on fait circuler un courant alternatif dans au moins un inducteur, simultanément à au moins deux fréquences différentes.

L'invention a enfin pour objet l'utilisation du procédé de fonctionnement d'un four décrit précédemment pour la fusion d'un mélange d'au moins un ou plusieurs métaux avec un ou plusieurs oxydes.

Le mélange peut être un mélange de métaux (acier, zirconium, ...) avec des oxydes (uranium UO₂, zircone, ...) ainsi que des composants du béton, le mélange étant représentatif d'un corium.

### Description détaillée

D'autres avantages et caractéristiques ressortiront mieux à la lecture de la description détaillée, faite à titre illustratif et non limitatif, en référence aux figures suivantes parmi lesquelles:
- la figure 1 est une vue en perspective partiellement écorchée d'un four à creuset à chauffage par induction électromagnétique susceptible de mettre en oeuvre le circuit de refroidissement selon l'invention,
- la figure 2 est une vue schématique de dessus d'un four à creuset également à chauffage par induction électromagnétique formant un four à creuset froid également susceptible de mettre en oeuvre le circuit de refroidissement selon l'invention,
- la figure 3 est une vue en perspective d'un four à chauffage par induction sans creuset formant un four à lévitation également susceptible de mettre en oeuvre le circuit de refroidissement selon l'invention,
- la figure 4 est une vue en perspective d'un four à creuset froid comportant un circuit de refroidissement selon l'invention,
- la figure 5 est une vue en perspective montrant deux inducteurs identiques à spires hélicoïdales susceptibles d'être agencés concentriquement l'un dans l'autre autour d'un four à induction selon l'invention,
- la figure 6 illustre une courbe de l'évolution de la capacité thermique Cp du CO₂ supercritique utilisé conformément à l'invention comme fluide de refroidissement d'un four à induction,
- la figure 7 illustre une courbe de la variation de la température du CO₂ supercritique dans un canal de dimensions données et à un débit donné et à titre comparatif, la courbe de variation de l'eau dans les conditions équivalentes de dimensions de canal et de débit.

Dans l'ensemble de la présente demande, les termes « vertical », « inférieur », « supérieur », « bas », « haut », « dessous » et « dessus » sont à comprendre par référence par rapport à un four à induction agencé en configuration verticale de fonctionnement. Ainsi, dans une configuration de fonctionnement, le four est agencé à la verticale avec son fond par lequel le matériau en fusion est évacué, vers le bas.

Les figures 1 à 3 ont déjà été commentées en préambule. Elles ne sont donc pas décrites en détail ci-après.

On a représenté en figure 4 un four à creuset froid 1' comportant au moins un circuit de refroidissement 5 conforme à l'invention, i.e. dans lequel le fluide caloporteur est du CO₂ supercritique. Un tel four 1' est de préférence destiné à réaliser la fusion d'une charge constituée d'un mélange de métal(ux) et d'oxyde(s), tel que l'oxyde d'uranium UO₂, représentatif d'un corium.

Un tel four 1' comporte un creuset 2 en cuivre entouré d'un inducteur, i.e. une bobine d'induction électromagnétique 4 à au moins une spire. Dans l'exemple représenté, l'inducteur 4 comporte un nombre égal à sept spires consécutives 41-47 identiques et équidistantes les unes des autres.

Bien que non représenté, la paroi latérale du creuset 2 est divisée en un certain nombre de secteurs 20 identiques. Ce nombre est égal à 8 dans l'exemple de la figure 4.

Le creuset 2 comporte également un fond, appelé sole, non représenté. Le fond peut être amovible ou être percé d'une ou plusieurs ouvertures traversante(s) afin de permettre l'évacuation du matériau ou mélange de matériaux une fois celui-ci (ceux-ci) à l'état liquide par fusion.

En divisant ainsi la paroi latérale du creuset 2 en secteurs 20, lorsque le courant alternatif parcourt la ou les spires de l'inducteur 4, les courants induits ne restent pas localisés à la périphérie du creuset, mais font le tour de chaque secteur 20, comme déjà expliqué en préambule en relation avec la figure 2. Ainsi, le courant I parcourant l'inducteur 4 (bobine) induit sur le creuset 2 un courant qui induit à son tour un courant à l'intérieur de la charge contenant au moins un matériau conducteur électrique, qui est logée dans le creuset. La charge fond alors par effet Joule. Lorsque la charge en fusion est devenue liquide, elle entre en contact avec les parois du creuset 2 refroidies par le circuit de refroidissement 5, ce qui la solidifie, créant ainsi un auto-creuset, c'est-à-dire une couche solide réalisée dans le(s) matériau(x) de la charge introduite initialement dans le creuset 2.

L'utilisation d'un tel four 1" à creuset froid est avantageuse pour la fusion d'une charge constituée d'un mélange d'oxyde d'uranium et de métal représentatif d'un corium. En effet, la température de fusion de l'oxyde d'uranium est de l'ordre de 2865°C, bien supérieure à la température de fusion des métaux, notamment l'inox. Le métal à ces températures est caractérisé par une viscosité quasi-nulle, c'est-à-dire qu'il peut s'infiltrer dans la moindre fissure du creuset. Avec la formation de l'auto-creuset comme expliqué ci-dessus, on s'assure d'une part que le métal présent dans la charge à faire fondre ne peut en aucun cas venir attaquer le métal constitutif des parois du creuset et d'autre part que le mélange de matériaux conserve sa pureté initiale.

De préférence, un élément, non représenté en matériau isolant électrique est agencé entre deux secteurs 20 consécutifs (adjacents). Un tél élément isolant sert non seulement à éviter les fuites et diminuer les pertes thermiques, mais également, à minimiser la formation d'arc électrique entre les secteurs de cuivre 20 lors du fonctionnement du four.

Tel qu'illustré en figure 4, le circuit de refroidissement 5 selon l'invention au CO₂ supercritique est également divisé en un nombre de secteurs de refroidissement agencés à la périphérie des secteurs 20 du creuset 2. Dans l'exemple illustré, le nombre de secteurs 5.1 à 5.8 de refroidissement est égal à celui des secteurs en cuivre 20, soit un nombre de huit secteurs. Plus précisément, comme illustré en figure 4, chaque secteur 5.1 à 5.8 comporte trois tubes accolés à l'extérieur du secteur 20 de paroi latérale du creuset 2 et qui débouchent sur un collecteur commun. Les tubes sont avantageusement en matériau électrique conducteur, de préférence en cuivre. En ce qui concerne le mode de fixation des tubes aux parois du creuset 2, tous les moyens connus peuvent être envisagés. A titre d'exemple, on peut envisager des fixations à l'aide de plaques en matériau isolant thermique supportant les hautes températures.

Ainsi, selon l'invention, lors du fonctionnement du four, on fait circuler à l'intérieur de chaque tube des secteurs de refroidissement 5.1 à 5.8 du CO₂ supercritique.

En outre, conformément à l'invention, il peut être envisagé de refroidir les spires 41 à 48 de l'inducteur 4 par un circuit de refroidissement supplémentaire à l'intérieur de l'inducteur. Autrement dit, on peut envisager une circulation interne aux spires 41 à 48 de l'inducteur 4 avec du CO₂ supercritique.

Selon un mode de réalisation avantageux, lorsque la charge à faire fondre est constituée d'un mélangde d'oxydes et d'au moins un métal, tel qu'un mélange représentatif d'un corium, on fait circuler dans l'inducteur 4 un courant alterrnatif fonctionnant simultanément à au moins deux fréquences différentes. En effet, la température du métal, tel que l'acier typiquement aux environs de 1300°C, est nettement inférieure à celles des oxydes, tels que l'oxyde d'uranium UO₂ aux environs de 2 865°C.

Ainsi, en alimentant en courant sous deux fréquences différentes dont l'une adaptée pour la fusion par induction du métal (des métaux) et l'autre à celle des oxydes, on s'assure d'une fusion simultanée des constituants du mélange tout en assurant un brassage et donc un mélange homogène, et en outre, on s'assure que, tout au long du processus de fusion le métal (les métaux) ne vienne(nt) pas directement en contact avec les parois du creuset. En effet, d'une part, pour un même matériau plus la fréquence d'induction est basse plus l'onde électromagnétique va pénétrer ledit matériau et donc générer un chauffage par effet Joule dans la masse. D'autre part, comme dit précédemment, du fait de leur différence de température de fusion, des oxydes requièrent des fréquences d'induction plus élevées et le métal (les métaux) des fréquences plus basses. Enfin, une fois le processus de fusion dans le four enclenché, le métal (les métaux) a(ont) une viscosité quasi-nulle lorsque les oxydes commencent à fondre. Ainsi, en utilisant une seule fréquence d'induction pour le fonctionnement d'un four selon l'invention, il subsiste un risque que le métal (les métaux) en fusion s'infiltre(nt) dans la moindre fissure présente dans les parois du creuset. Il y à également un risque que le métal (les métaux) vienne(nt) s'agglomérersur lesdites parois, ce qui aurait pour effet néfaste de réaliser un écran aux ondes électromagnétiques et éventuellement de détériorer l'inducteur. Par conséquent, le fonctionnement d'un four selon l'invention à deux fréquences différentes permet d'éviter, a minima réduire ces risques : tout au long du processus de fusion, le métal (les métaux) est(sont) repoussé(s) vers l'intérieur du creuset. On obtient ainsi un mélange homogène dans un système d'équilibre des constituants en fusion.

Ainsi, de préférence, les fréquences de fonctionnement de l'inducteur 4 sont comprises entre 10 et 500 kHz. Une fréquence de fonctionnement efficace est aux environs de 100 kHz.

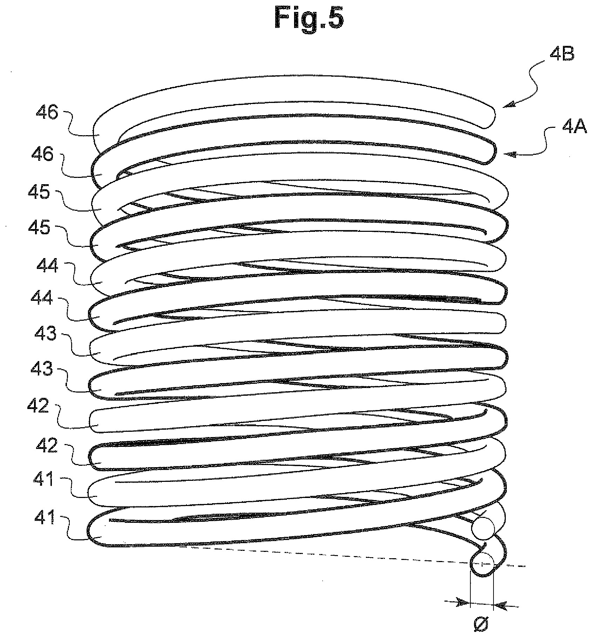

A titre de variante, on peut envisager la mise en oeuvre de deux inducteurs distincts l'un fonctionnant avec une fréquence adaptée pour la fusion par induction du métal (des métaux) et l'autre fonctionnant avec une fréquence à celle des oxydes. Cette variante est facilitée par l'utilisation du CO₂ supercritique qui grâce à sa plus grande efficacité permet d'envisager une réduction d'un facteur égal à deux du diamètre des spires. On a représenté en figure 5, deux inducteurs identiques 4A, 4B avec chacun un nombre égal à six spires 41-46 hélicoïdales qui peuvent être agencés concentriquement l'une dans l'autre autour du creuset 2 décrit précédemment, en lieu eu place de l'inducteur unique 4. Grâce à l'utilisation du CO₂ supercritique comme fluide de refroidissement selon l'invention, il est possible d'envisager un diamètre Ø des spires des deux inducteurs 4A, 4B qui est deux fois moins grand que celui de l'inducteur unique 4.

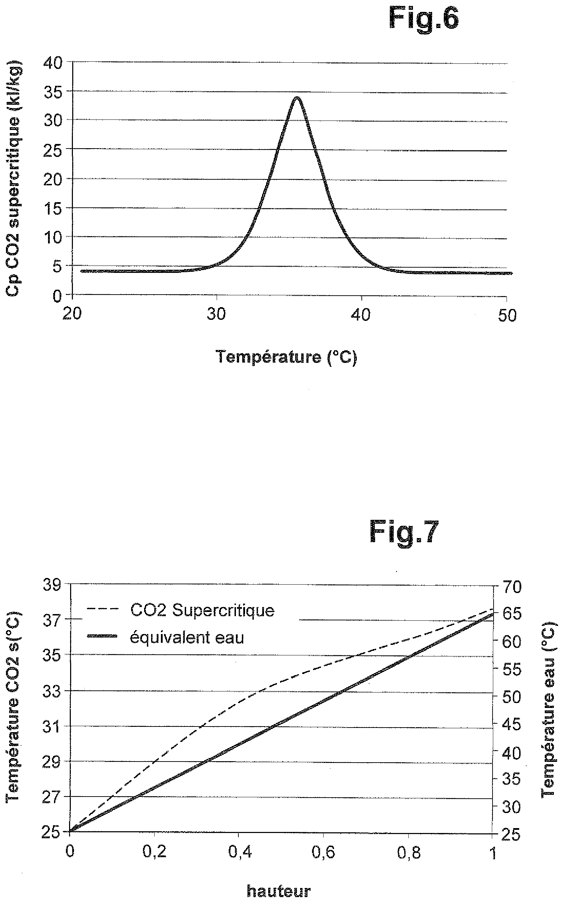

La figure 6 montre clairement l'avantage conséquent d'utiliser en tant que fluide de refroidissement d'un four à induction du CO₂ supercritique en lieu et place de l'eau du fait de la capacité calorifique massique Cp (capacité thermique). Ainsi, il ressort de cette courbe de la figure 6 que la capacité thermique Cp croit très fortement entre 30°C et 40°C et atteindre une valeur proche de 35 kJ.Kg⁻¹, soit une valeur jusqu'à 10 fois supérieure à celle de l'eau. Aussi, grâce à l'invention, on peut envisager une diminution très conséquente du diamètre des secteurs 20 de parois de creuset et/ou de celui des spires d'inducteur 4, jusqu'à un facteur égal à deux par rapport aux dimensions des fours à creuset froid existants.

La figure 7 indique en outre une comparaison de la variation de la température du fluide dans un canal de dimensions donné sous un débit donné respectivement avec du CO₂ supercritique selon l'invention et une équivalence (diamètre et débit) avec de l'eau selon l'état de l'art. On constate que la variation de la température de l'eau est linéaire alors que celle du CO₂ supercritique augmente plus rapidement du fait de l'augmentation de la capacité calorifique de ce dernier avec la température. On peut en déduire qu'avec du CO₂ supercritique, il est possible d'adapter le débit pour optimiser la capacité de refroidissement au centre du creuset 2 d'un four à induction, c'est-à-dire à l'endroit où la température est maximale. Ainsi, un avantage subséquent à la mise en oeuvre de CO₂ supercritique en tant que fluide de refroidissement d'un four à induction à creuset est de rendre la température plus uniforme au niveau dudit creuset.

L'invention n'est pas limitée aux exemples qui viennent d'être décrits; on peut notamment combiner entre elles des caractéristiques des exemples illustrés au sein de variantes non illustrées dans le cadre des revendications annexées.

### Référence citée

[1] : « *Utilisation du CO2 supercritique comme solvant de substitution* », Guy LUMIA, Techniques de l'Ingénieur In5

## Revendications

1. Procédé de fonctionnement d'un four (1, 1', 1") à chauffage par induction électromagnétique destiné à faire fondre au moins un matériau conducteur électrique, tel qu'un oxyde et/ou un métal, comprenant au moins un inducteur (4, 4A, 4B) à au moins une spire (41 à 47), au moins un circuit de refroidissement (5) adapté pour refroidir au moins l'inducteur, un creuset pour contenir le matériau à faire fondre et un circuit de refroidissement adapté pour refroidir les parois du creuset, selon lequel on fait circuler au moins dans le circuit de refroidissement (5; 5.1 à 5.8) du creuset du CO₂ supercritique en tant que fluide caloporteur.

2. Procédé selon la revendication 1, selon lequel on fait fonctionner un inducteur simultanément à au moins deux fréquences différentes.

3. Procédé selon l'une des revendications 1 ou 2, selon lequel on fait fonctionner au moins deux inducteurs distincts (4A, 4B) simultanément à des fréquences différentes.

4. Procédé selon la revendication 2 ou 3, selon lequel on fait fonctionner l'au moins un inducteur à une fréquence adaptée pour la fusion d'un ou plusieurs métal (ux) et à une autre fréquence adaptée pour la fusion d'un ou plusieurs oxyde(s).

5. Procédé selon l'une des revendications précédentes, selon lequel on fait fonctionner l'au moins un inducteur à une ou des fréquence(s) comprise(s) entre 10 et 500 kHz.

6. Procédé selon l'une des revendications précédentes, selon lequel on fait circuler le CO₂ supercritique à une pression comprise entre sa pression critique Pc, de l'ordre de 73 bars, et 100 bars et des températures comprises entre sa température critique Tc, de l'ordre de 31°c, en entrée dudit au moins un circuit de refroidissement et 50°C en sortie dudit au moins un circuit de refroidissement de sorte à avoir une capacité thermique massique Cp du CO₂ supercritique au moins égale à 4 kJ.kg⁻¹.K⁻¹.

7. Procédé selon l'une des revendications 1 à 6, selon lequel on fait circuler un courant alternatif dans au moins un inducteur, simultanément à au moins deux fréquences différentes.

8. Utilisation du procédé de fonctionnement d'un four selon l'une des revendications 1 à 7 pour la fusion d'un mélange d'au moins un ou plusieurs métaux avec un ou plusieurs oxydes.

9. Utilisation selon la revendication 8, le mélange étant un mélange de métaux avec des oxydes ainsi que des composants du béton, le mélange étant représentatif d'un corium.

## Patentansprüche

1. Verfahren zum Betreiben eines durch elektromagnetische Induktion beheizten Ofens (1, 1', 1"), der zum Schmelzen mindestens eines elektrisch leitfähigen Materials wie eines Oxids und/oder eines Metalls bestimmt ist, umfassend mindestens einen Induktor (4, 4A, 4B) mit mindestens einer Windung (41 bis 47), mindestens einen Kühlkreis (5), der geeignet ist, mindestens den Induktor zu kühlen, einen Tiegel zum Aufnehmen des zu schmelzenden Materials und einen Kühlkreis, der geeignet ist, die Wände des Tiegels zu kühlen, gemäß dem man mindestens im Kühlkreis (5; 5.1 bis 5.8) des Tiegels überkritisches CO₂ als Wärmeträgerfluid zirkulieren lässt.

2. Verfahren nach Anspruch 1, gemäß dem ein Induktor gleichzeitig mit mindestens zwei unterschiedlichen Frequenzen betrieben wird.

3. Verfahren nach einem der Ansprüche 1 oder 2, gemäß dem mindestens zwei verschiedene Induktoren (4A, 4B) gleichzeitig mit unterschiedlichen Frequenzen betrieben werden.

4. Verfahren nach Anspruch 2 oder 3, gemäß dem der mindestens eine Induktor mit einer Frequenz betrieben wird, die zum Schmelzen eines oder mehrerer Metalle geeignet ist, und mit einer weiteren Frequenz, die zum Schmelzen eines oder mehrerer Oxide geeignet ist.

5. Verfahren nach einem der vorhergehenden Ansprüche, gemäß dem der mindestens eine Induktor mit einer Frequenz oder mit Frequenzen zwischen 10 und 500 kHz betrieben wird.

6. Verfahren nach einem der vorhergehenden Ansprüche, gemäß dem man das überkritische CO₂ mit einem Druck zwischen seinem kritischen Druck Pc von etwa 73 bar und 100 bar und mit Temperaturen zwischen seiner kritischen Temperatur Tc von etwa 31°C im Einlass des mindestens einen Kühlkreises und 50°C im Auslass des mindestens einen Kühlkreises zirkulieren lässt, so dass eine spezifische Wärmekapazität Cp des überkritischen CO₂ von mindestens 4 kJ.kg⁻¹.K⁻¹ erhalten wird.

7. Verfahren nach einem der Ansprüche 1 bis 6, gemäß dem man einen Wechselstrom in mindestens einem Induktor gleichzeitig mit mindestens zwei unterschiedlichen Frequenzen fließen lässt.

8. Verwendung des Verfahrens zum Betreiben eines Ofens nach einem der Ansprüche 1 bis 7 zum Schmelzen eines Gemisches aus mindestens einem oder mehreren Metallen und einem oder mehreren Oxiden.

9. Verwendung nach Anspruch 8, wobei das Gemisch ein Gemisch aus Metallen und Oxiden sowie Bestandteilen des Betons ist, wobei das Gemisch repräsentativ für ein Corium ist.

## Claims

1. An operating process of an electromagnetic induction furnace (1, 1', 1") intended to melt at least one electrically conductive material, such as an oxide and/or a metal, comprising at least one inductor (4, 4A, 4B) having at least one turn (41 to 47), at least one cooling circuit (5) suitable for cooling at least the inductor, a crucible for containing the material to be melted and a cooling circuit suitable for cooling the walls of the crucible, according to which at least into the cooling circuit (5; 5.1 to 5.8) of the crucible, supercritical CO₂ is circulating, as a heat transfer fluid.

2. The process as claimed in claim 1, according to which an inductor operates simultaneously at at least two different frequencies.

3. The process as claimed in claim 1 or 2, according to which at least two separate inductors (4A, 4B) operate simultaneously at different frequencies.

4. The process as claimed in claim 2 or 3, according to which the at least one inductor operates at a frequency suitable for melting one or more metal(s) and at another frequency suitable for melting one or more oxide(s).

5. The process as claimed in one of the preceding claims, according to which the at least one inductor operates at a frequency or frequencies between 10 and 500 kHz.

6. The process as claimed in one of the preceding claims, wherein supercritical CO₂ is circulated at a pressure between its critical pressure Pc, of the order of 73 bar, and 100 bar and temperatures between its critical temperature Tc, of the order of 31°C, at the inlet of said at least one cooling circuit and 50°C at the outlet of said at least one cooling circuit so as to have a specific heat capacity Cp of the supercritical CO₂ at least equal to 4 kJ.kg⁻¹.

7. The process as claimed in one of claims 1 to 6, wherein an alternating current is circulated in at least one inductor, simultaneously at at least two different frequencies.

8. The use of the process for operating a furnace as claimed in one of claims 1 to 7 for melting a mixture of at least one or more metals with one or more oxides.

9. The use as claimed in claim 8, the mixture being a mixture of with oxides and also components of the concrete, the mixture being representative of a corium.
